# FASCICULE DE BREVET EUROPEEN

(11) **EP 1 488 116 B1**
(45) Date de publication et mention de la délivrance du brevet: **31.05.2006**
(21) Numéro de dépôt: 03738207.4
(22) Date de dépôt: 27.03.2003
(51) Int. Cl.: F16B 23/00, B60B 7/06

(54) **DISPOSITIF ANTIVOL, NOTAMMENT POUR ROUES DE VEHICULES**
INSBESONDERE FÜR FAHRZEUGRÄDER BESTIMMTE DIEBSTAHLSICHERUNGSVORRICHTUNG
ANTI-THEFT DEVICE INTENDED, IN PARTICULAR, FOR VEHICLE WHEELS

(30) Priorité: 27.03.2002 FR 0203818
(43) Date de publication de la demande: 22.12.2004
(73) Titulaire: Société des Forges de Froncles S.A., 52320 Froncles (FR)
(72) Inventeur: PICARD, Frédéric, F-53320 Froncles (FR)
(74) Mandataire: Rhein, Alain
(86) Numéro de dépôt international: PCT/FR2003/000978
(87) Numéro de publication internationale: WO 2003/081057

(56) Documents cités:
- EP-A- 0 468 899
- WO-A-00/71301
- FR-A- 2 518 673
- FR-A- 2 567 215
- FR-A- 2 638 496
- FR-A- 2 675 553
- US-A- 4 027 572
- US-A- 4 302 137
- US-A- 5 474 408

## Description

La présente invention concerne un dispositif antivol, en particulier de roues de véhicules, du type composé d'un ensemble comprenant un organe pouvant être adapté sur la visserie desdites roues, muni d'un codage lui étant propre, et une clé conformée de manière à correspondre audit codage et à permettre le verrouillage ou le déverrouillage de l'organe sur la visserie desdites roues.

Actuellement, des dispositifs de ce type sont d'ores et déjà installée, de manière systématique, sur la plupart des véhicules de luxe ou de grosses cylindrées qui sont équipés de roues particulièrement onéreuses, car comprenant des jantes en alliage et de pneus de grandes dimensions, et qui font souvent l'objet de vols, ou de tentatives de vols.

Ces dispositifs peuvent, bien entendu, également consister en un équipement optionnel lorsqu'il n'est pas prévu de série sur la gamme de véhicules concernée, ou être installés ultérieurement sur des voitures d'occasion, si nécessaire.

On connaît, aujourd'hui, plusieurs formes de réalisation d'antivols de ce type. Les plus fréquents sont ceux comprenant un organe adaptateur apte à être solidarisé à une vis, et un organe d'entraînement, ledit organe adaptateur comportant une face percée de trous borgnes répartis non régulièrement et destinés à coopérer avec des doigts ou pions que comporte en débordement ledit organe d'entraînement.

Un tel dispositif est par exemple décrit dans le document FR 2 518 673 (correspondant an préambule de la revendication indépendante) qui propose de plus de munir la face percée de l'organe adaptateur, d'une collerette en débordement pour rendre l'accès auxdits trous moins aisé.

On connaît également, par le document FR 2 567 215, un dispositif antivol consistant en une vis présentant, au niveau de sa tête, des conformations spécifiques, dont certaines servent à l'entraînement en rotation, tandis que d'autres forment un code, nécessitant l'utilisation d'une douille conformée de manière appropriée audit code pour visser et dévisser ladite vis.

Un autre dispositif similaire est décrit dans le document FR 2 587 422. Ici, l'antivol se présente sous la forme d'une pièce comprenant un organe apte à être vissé sur une vis de roue de véhicule.

Ledit organe porte des trous de codage, il est monté fou en rotation à l'intérieur d'un capuchon portant des alésages superposables aux trous, et il est dévissable uniquement par un outil présentant des picots dont la répartition correspond au même codage.

Enfin, du document FR 2 728 318, on connaît un dispositif du même type, qui comprend un ensemble clé et vis comportant des faces coopérantes sur lesquelles sont réalisés, selon le cas, des saillies ou des creux, de formes complémentaires, disposés selon un code spécifique, et présentant une structure particulière audit dispositif.

Bien que proposés sous une pluralité de formes et de structures, les dispositifs antivols connus à l'heure actuelle ne donnent cependant pas entière satisfaction.

En effet, bien que nécessitant, en théorie, l'utilisation d'une clé spécifique au code propre au dispositif concerné, la majorité des ces antivols se révèlent néanmoins assez faciles à démonter, à l'aide d'outils de dévissage classiques ou spécialement fabriqués à cet effet par des personnes malveillantes, et sans qu'il ne soit nécessaire de faire preuve d'habileté ou d'ingéniosité particulière.

Ainsi, les dispositifs antivols comprenant un organe muni de plusieurs trous positionnés de sorte à former un code, peuvent, par exemple, être aisément démontés à l'aide d'une clé dont on aurait meulé tous les picots à l'exception d'un seul, pour la transformer en clé universelle pour ce type de dispositif.

D'autre part, il est aujourd'hui possible de se procurer très facilement, via des réseaux de communication mondiaux, notamment, des kits de clés permettant de démonter la plupart des antivols installés sur les véhicules à l'heure actuelle.

Ces dispositifs ne sont, par conséquent, plus du tout fiables, et ne répondent plus aux critères de sécurité exigés par les utilisateurs.

De surcroît, certains de ces dispositifs présentent des structures particulièrement sophistiquées, sont complexes à fabriquer, et sont par conséquent, généralement proposés à des prix élevés, ne permettant pas de systématiser leur installation sur des véhicules de moyenne catégorie.

Ainsi, cet inconvénient a pour effet de freiner l'intérêt des consommateurs et le déploiement commercial de ces antivols.

La présente invention a pour but de pallier ces divers inconvénients, en proposant un dispositif antivol de roues de véhicules de structure simple, peu onéreux et totalement inviolable.

Le dispositif antivol, notamment pour roues de véhicules, selon l'invention, est composé d'un ensemble comprenant un organe apte à être adapté sur la visserie desdites roues, muni de moyens de codage positionnés et conformés de manière à constituer un code propre audit organe, et une clé ou analogue munie de moyens de décodage complémentaires desdits moyens de codage en vue de coopérer avec ledit organe pour permettre la transmission d'un couple de serrage ou de desserrage selon le cas, et il se caractérise en ce que ledit organe présente une tête globalement cylindrique bordée extérieurement à une certaine distance et coaxialement d'une collerette ou analogue délimitant avec ladite tête un espace annulaire prévu apte à loger étroitement la partie extrême de forme annulaire de ladite clé ou analogue qui se présente sous la forme d'une douille, et en ce que ladite tête globalement cylindrique présente sur son pourtour, en des emplacements angulaires aléatoires pour former ledit code, des empreintes longitudinales parallèles à l'axe de ladite tête, destinées à coopérer avec des empreintes concordantes que comporte la paroi interne de ladite partie extrême de forme annulaire.

Selon une caractéristique additionnelle du dispositif selon l'invention, la tête globalement cylindrique présente une forme tronconique, allant en rétrécissant vers son extrémité.

La forme tronconique de la tête permet notamment de limiter les possibilités de son saisissement au moyen d'un outil de serrage tel qu'une pince.

Selon une caractéristique particulièrement avantageuse du dispositif selon l'invention, l'espace annulaire présente une section de forme évasée.

Selon une autre caractéristique additionnelle du dispositif selon l'invention, les empreintes de la tête globalement cylindrique consistent en des gorges tandis que les empreintes de la paroi interne de la douille consistent en des bossages.

Selon un autre mode de réalisation du dispositif selon l'invention, les empreintes de la tête globalement cylindrique consistent en des bossages tandis que les empreintes de la paroi interne de la douille consistent en des gorges.

Selon une autre caractéristique additionnelle du dispositif selon l'invention, quel que soit son mode de réalisation, les gorges et les bossages présentent une section transversale en portion cercle.

Selon une autre caractéristique additionnelle du dispositif selon l'invention, un plot permettant la fixation d'un moyen enjoliveur, déborde de la tête globalement cylindrique.

Selon une autre caractéristique additionnelle du dispositif selon l'invention, le plot se présente sous la forme d'un bloc cylindrique de diamètre légèrement inférieur à celui de la tête globalement cylindrique apte à coopérer avec un moyen de fixation du moyen enjoliveur.

Selon une autre caractéristique additionnelle du dispositif selon l'invention, le plot est relié à la tête globalement cylindrique par le biais d'une gorge d'amorce de rupture.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue de profil et en coupe partielle, d'un mode de réalisation de l'organe apte à être adapté sur la visserie des roues, selon l'invention,
La figure 2 représente une vue schématique de face du même organe,
La figure 3 représente une vue partielle en coupe selon l'axa A-A de la figure 2,
La figure 4 représente une vue de profil d'une partie du même organe,
La figure 5 représente une vue en perspective d'une clé apte à coopérer avec l'organe pour le visser ou le dévisser,
La figure 6 représente une vue de face de la même clé,
La figure 7 représente une vue en coupe de ladite clé selon l'axe B-B de la figure 6.

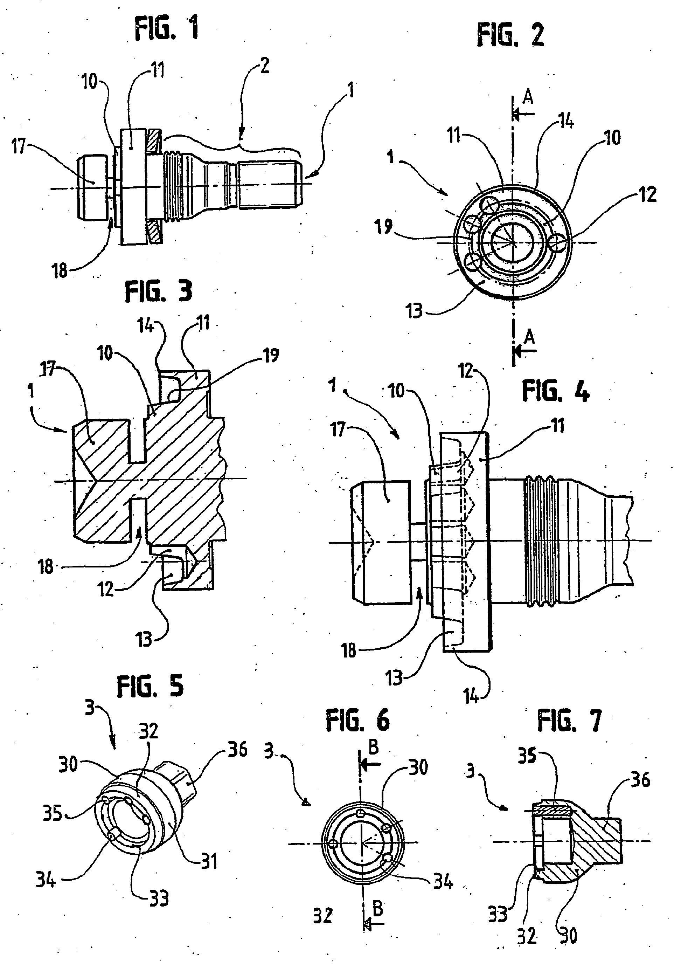

En référence aux figures 1, 2, 3 et 4 on peut voir que le dispositif antivol selon l'invention comprend un organe 1, destiné à remplacer la vis d'une roue ou à y être adapté, et qui comprend, outre une partie 2 filetée, une tête globalement cylindrique 10, et plus exactement tronconique, faisant saillie d'un élément 11 en forme de disque, de diamètre plus large.

Cette tête tronconique 10 présente sur son pourtour, dans sa paroi périphérique 19, une pluralité de gorges 12, en l'occurrence quatre, parallèles à l'axe de l'organe 1 et de section en portion de cercle, et positionnées angulairement de manière aléatoire sur son pourtour pour former un code propre à l'organe 1, tandis qu'une collerette 14 déborde de l'élément 11 à une certaine distance de la tête 10 et extérieurement à celle-ci, pour délimiter un évidement annulaire 13.

En référence maintenant aux figures 5, 6 et 7, on peut voir qu'une clé ou organe d'entraînement 3 se présente sous la forme d'une douille 30 comportant un évidement central 31 de forme cylindrique, comprenant à une extrémité un embout hexagonal 36 apte à être saisi par un outil de serrage, et à l'autre extrémité une partie de forme annulaire 32 conformée pour pouvoir être insérée pratiquement sans jeu dans l'évidement annulaire 13 de l'organe 1. D'autre part, de la face interne 33 de la partie annulaire 32 font saillie des bossages 34 de section transversale en portion de cercle, disposés de manière concordante avec les emplacements des gorges 12, en sorte de permettre une parfaite coopération avec celles-ci lors de l'introduction de l'élément annulaire 32 dans l'évidement annulaire 13.

On comprendra que lors de l'engagement de l'élément annulaire dans l'évidement annulaire, les bossages 34 coopèrent avec les gorges 12, ce qui permet la transmission d'un couple de serrage ou de desserrage.

Du point de vue construction, les gorges 12 sont réalisées par le percement de trous dans l'organe 1 parallèlement à l'axe de celui-ci et en sorte d'entamer la paroi 19, tandis que les bossages 34 consistent, comme cela est plus particulièrement visible sur le figure 7, en des pions cylindriques 35 introduits dans des trous 37 percés parallèlement à l'axe principal et en partie dans la collerette 32.

On notera que dans une variante du dispositif selon l'invention, c'est la clé 3 qui comporte des gorges tandis que l'organe 1 porte les bossages.

Ainsi, seule une clé 3 adéquate peut permettre de manoeuvrer l'organe 1.

En effet, l'utilisation d'un outil de serrage tel qu'une pince nécessiterait de pouvoir introduire les mâchoires de cet outil dans l'espace annulaire 13, et de pouvoir saisir la tête 1 qui est de forme tronconique en vue d'y appliquer un couple important. Ce qui est impossible. A ce sujet il est à noter que l'organe 1 est destiné à être vissé et enfoui dans un puits de jante, en sorte qu'il n'est pas possible de le saisir par l'extérieur de la collerette 14.

D'autre part, on pourrait imaginer une clé 3 universelle ne comprenant qu'un seul bossage 34, réalisée par le meulage des autres bossages par exemple, or une telle clé, du fait de la forme conique de la tête 1 et de la partie annulaire 32, ne pourrait qu'échapper, et ne permettrait pas la transmission du couple de desserrage nécessaire.

De manière optionnelle, l'organe 1 présente, par ailleurs, un plot 17 surmontant la tête tronconique 10, et prévu apte à permettre la fixation d'un moyen enjoliveur tel qu'un cabochon chromé, ce plot 17 consiste en un bloc cylindrique de diamètre inférieur à celui de la tête tronconique 10.

Afin que le plot 17 ne puisse pas offrir la possibilité de prise ou d'appui pour le dévissage de l'organe 1 au moyen d'outils du type pince, aussi, il est créé entre ce plot 17 et la tête tronconique 10 une gorge 18 d'amorce de rupture, apte à provoquer la section ou la flexion du plot 17 sous l'effet d'un couple.

## Revendications

1. Dispositif antivol, notamment pour roues de véhicules, composé d'un ensemble comprenant un organe (1) apte à être adapté sur la visserie desdites roues, muni de moyens de codage positionnés et conformés de manière à constituer un code propre audit organe, et une clé (3) ou analogue munie de moyens de décodage complémentaires desdits moyens de codage en vue de coopérer avec ledit organe (1) pour permettre la transmission d'un couple de serrage ou de desserrage selon le cas, ledit organe (1) présentant une tête globalement cylindrique (10), **caractérisé en ce que** ladite tête (10) est bordée extérieurement à une certaine distance et coaxialement d'une collerette (14) ou analogue délimitant avec ladite tête (10) un espace annulaire (13) prévu apte à loger étroitement la partie extrême (32) de forme annulaire de ladite clé (3) ou analogue qui se présente sous la forme d'une douille, et **en ce que** ladite tête globalement cylindrique (10) présente sur son pourtour (19), en des emplacements angulaires aléatoires pour former ledit code, des empreintes longitudinales (12) parallèles à l'axe de ladite tête (10), destinées à coopérer avec des empreintes concordantes (34) que comporte la paroi interne (33) de ladite partie extrême (32) de forme annulaire.

2. Dispositif selon la revendication 1, **caractérisé en ce que** la tête globalement cylindrique (10) présente une forme tronconique, allant en rétrécissant vers son extrémité.

3. Dispositif selon la revendication 1 ou la revendication 2, **caractérisé en ce que** l'espace annulaire (13) présente une section de forme évasée.

4. Dispositif selon l'une quelconque des revendications précédentes, **caractérisé en ce que** les empreintes du pourtour (19) de la tête globalement cylindrique consistent en des gorges (12), tandis que les empreintes de la paroi interne (33) de la douille consistent en des bossages (34).

5. Dispositif selon l'une quelconque des revendications 1 à 3, les empreintes de la tête globalement cylindrique (1) consistent en des bossages tandis que les empreintes de la paroi interne de la douille consistent en des gorges.

6. Dispositif selon la revendication 4 ou la revendication 5, **caractérisé en ce que** les gorges (12) et les bossages (33) présentent une section transversale en portion cercle.

7. Dispositif selon l'une quelconque des revendications précédentes, **caractérisé en ce qu'**un plot (17) permettant la fixation d'un moyen enjoliveur, déborde de la tête globalement cylindrique (1).

8. Dispositif selon la revendication 7, **caractérisé en ce que** le plot (17) se présente sous la forme d'un bloc cylindrique de diamètre légèrement inférieur à celui de la tête globalement cylindrique (1), et apte à coopérer avec un moyen de fixation du moyen enjoliveur.

9. Dispositif selon la revendication 7 ou la revendication 8, **caractérisé en ce que** le plot (17) est relié à la tête globalement cylindrique (1) par le biais d'une gorge d'amorce de rupture (18).

## Claims

1. Anti-theft device, intended in particular for vehicle wheels, comprised of an aggregate comprising an organ (1) capable of being adapted on the screws and bolts of said wheels, provided with encoding means positioned and modeled in order to constitute a specific code for said organ, and a key (3) or similar provided with decoding means complementary to said encoding means with a view to co-operating with said organ (1) in order to permit the transmission of a tightening or loosening torque, according to the case, said organ (1) having a globally cylindrical head (10), **characterised in that** said head (10) is bordered outside, at a certain distance and coaxially, by a collar (14) or similar delimiting with said head (10) an annular space (13) designed capable of tightly accommodating the furthest, ring-shaped portion (32) of said key (3) or similar which is in the form of a bushing, and **in that** said globally cylindrical head (10) has on its circumference (19), at random angular spots to form said code, longitudinal imprints (12) parallel to the axis of said head (10), aimed at co-operating with corresponding imprints (34) the internal wall (33) of said ring-shaped furthest portion (32) includes.

2. Device according to claim 1, **characterised in that** the globally cylindrical head (10) has a truncated shape, getting narrower toward its end.

3. Device according to claim 1 or claim 2, **characterized in that** the annular space (13) has a bell-shaped section.

4. Device according to any of the preceding claims, **characterised in that** the imprints of the circumference (19) of the globally cylindrical head consist of grooves (12), whereas the imprints of the internal wall (33) of the bushing consist of bosses (34).

5. Device according to any of claims 1 through 3, wherein the imprints of the globally cylindrical head (1) consist of bosses whereas the imprints of the internal wall of the bushing consist of grooves.

6. Device according to claim 4 or claim 5, **characterized in that** the grooves (12) and the bosses (33) have a cross section in portion of a circle.

7. Device according to any of the preceding claims, **characterized in that** a stud (17) permitting the fastening of hubcap means protrudes out of the globally cylindrical head (1).

8. Device according to claim 7, **characterized in that** the stud (17) is in the form of a cylindrical block having a diameter slightly smaller than that of the globally cylindrical head (1), and capable of co-operating with means for fastening the hubcap means.

9. Device according to claim 7 or claim 8, **characterized in that** the block (17) is connected to the globally cylindrical head (1) through a fracture starting groove (18).

## Patentansprüche

1. Insbesondere für Fahrzeugräder bestimmte Diebstahlsicherungsvorrichtung, bestehend aus einer Gesamtheit, umfassend ein Organ (1), das geeignet ist, um an die Schrauben der besagten Räder angepaßt zu werden, das mit Kodierungsmitteln ausgestattet ist, die derart positioniert und angepaßt sind, um einen eigenen Code für das betreffende Organ zu erstellen, und einen Schlüssel (3) oder dergleichen, der mit zu den besagten Verschlüsselungsmitteln ergänzenden Dekodierungsmitteln ausgestattet ist, um mit dem besagten Organ (1) zusammenzuwirken, um die Übertragung eines je nach dem Fall Festspann- oder Entspannungsmoments zu erlauben, wobei das besagte Organ (1) einen im allgemeinen zylindrischen Kopf (10) aufweist, **dadurch gekennzeichnet, daß** der besagte Kopf äußerlich in einer gewissen Entfernung und koaxial von einem Flansch (14) oder dergleichen umrandet ist, der mit dem besagtem Kopf (10) einen ringförmigen Raum (13) abgrenzt, der geeignet vorgesehen ist, um den äußersten, ringförmigen Teil (32) des besagten Schlüssels (3) oder dergleichen eng aufzunehmen, der als eine Hülse ausgestaltet ist, und daß der besagte im allgemeinen zylindrische Kopf (10) auf seinem Umfang (19) an zufälligen Winkelstellen, um den besagten Code zu bilden, Längsprägungen (12) aufweist, die zu der Achse des besagten Kopfes (10) parallel sind, vorgesehen, um mit übereinstimmenden Prägungen (34) zusammenzuwirken, die die innere Wand (33) des besagten äußersten, ringförmigen Teiles (32) umfaßt.

2. Vorrichtung nach Anspruch 1, **dadurch gekennzeichnet, daß** der im allgemeinen zylindrische Kopf (10) eine kegelstumpfartige Form aufweist, die sich in Richtung seines Endes einengt.

3. Vorrichtung nach Anspruch 1 oder Anspruch 2, **dadurch gekennzeichnet, daß** der ringförmige Raum (13) einen Querschnitt mit erweiterter Form aufweist.

4. Vorrichtung nach irgendeinem der vorgehenden Ansprüche, **dadurch gekennzeichnet, daß** die Umfangsprägungen (19) des im allgemeinen zylindrischen Kopfes aus Rillen (12) bestehen, während die Prägungen der inneren Wand (33) der Hülse aus Buckeln (34) bestehen.

5. Vorrichtung nach irgendeinem Anspruch 1 bis 3, bei der die Prägungen des im allgemeinen zylindrischen Kopfes (1) aus Buckeln bestehen, während die Prägungen der inneren Wand der Hülse aus Rillen bestehen.

6. Vorrichtung nach Anspruch 4 oder Anspruch 5, **dadurch gekennzeichnet, daß** die Rillen (12) und die Buckel (33) einen zum Teil kreisförmigen Querschnitt aufweisen.

7. Vorrichtung nach irgendeinem der vorgehenden Ansprüche, **dadurch gekennzeichnet, daß** ein Stelzlager (17), das die Befestigung einer Radkappe erlaubt, über den im allgemeinen zylindrischen Kopf (1) hinausragt.

8. Vorrichtung nach Anspruch 7, **dadurch gekennzeichnet, daß** das Stelzlager (17) als eine zylindrischer Block mit einem Durchmesser, der etwas kleiner ist als jener des im allgemeinen zylindrischen Kopfes (1), ausgestaltet und geeignet ist, um mit einem Mittel zur Befestigung der Radkappe zusammenzuwirken.

9. Vorrichtung nach Anspruch 7 oder Anspruch 8, **dadurch gekennzeichnet, daß** das Stelzlager (17) über eine Rille des Anbruchs (18) mit dem im allgemeinen zylindrischen Kopf (1) verbunden ist.
